# EUROPEAN PATENT SPECIFICATION

(11) **EP 2 163 034 B1**
(45) Date of publication and mention of the grant of the patent: **11.01.2012**
(21) Application number: 08759702.7
(22) Date of filing: 16.05.2008
(51) Int. Cl.: H04L 12/18

(54) **ENHANCED ONLINE COLLABORATION SYSTEM**
ERWEITERTES ONLINE-KOLLABORATIONSSYSTEM
SYSTÈME DE COLLABORATION EN LIGNE AMÉLIORÉ

(30) Priority: 21.05.2007 US 751123
(43) Date of publication of application: 17.03.2010
(73) Proprietor: International Business Machines Corporation, Armonk, NY 10504 (US)
(72) Inventor: FACEMIRE, Michael Dennis, Pittsboro, North Carolina 27312 (US); COHEN, Gabriel Aaron, San Mateo, California 94403 (US); WANDERSKI, Michael, Durham, North Carolina 27713 (US); MITCHELL JR, Gerald Laverte, Winchester Hampshire SO21 2JN (GB)
(74) Representative: Roberts, Scott Anthony
(86) International application number: PCT/EP2008/056067
(87) International publication number: WO 2008/142030

(56) References cited:
- WO-A-01/93529
- WO-A-98/21664
- US-A1- 2005 078 613

## Description

### FIELD OF THE INVENTION

The present invention relates to online collaboration systems and more particularly to an enhanced online collaboration system for use by viewers of certain types of widely distributed presentations.

### BACKGROUND OF THE INVENTION

Rapid growth in the availability of reasonably-priced but nevertheless powerful personal computer systems coupled with explosive growth of the Internet has created unprecedented opportunities for people to collaborate online with large numbers of other people on a local, national or even global scale. Chat rooms have always been a popular way for people to exchange thoughts with one another on topics of common interest. In a chat room, every user can independently create messages that are sent to a chat server. Unlike a conventional e-mail system where messages are stored before being forwarded to specific recipients at their request, chat room messages are posted (i.e., made available to all other users of the chat room) as soon as they are received. Every user is free to comment on any previously posted messages. The intent of a chat room is to provide a text-based equivalent of a room full of people, many of whom are trying to talk at the same time about generally the same topic.

Early chat rooms rarely fulfilled that intent. Relatively low network data transmission rates and relatively slow personal computer systems caused significant delays in getting posted messages to chat room users and more delays in getting responses from those users. Since every user could submit messages at any time without regard to what was currently being posted in the chat room, it was not uncommon for a discussion to completely change direction before a given user could respond to a previously posted comment. By the time the given user's message reached the chat server, other users would have shifted the discussions to a different topic, reducing the relevancy of the given user's message.

Problems caused by network transmission and processing delays limited the usefulness of chat rooms. While chat rooms were feasible where people wanted to collaborate on a topic that either didn't change or changed relatively slowly, chat rooms were of relatively little value if people wanted to collaborate on a rapidly changing "topic", such as a professional football game as it was being played or a television show as it was being broadcast.

As both processors and networks have become faster and faster, it has become more and more feasible for people to collaborate online on real-time events, such as a football game or television broadcast. And, as online collaboration systems have become better able to "keep up" with real-time events, such systems have became more popular with more people until there are now significant communities of people who tune in to the "live" event while simultaneously, enthusiastically collaborating with others online (both within their community and throughout their country or the world) as the event progresses.

The effectiveness of online collaboration among widely-separated people who are nominally all viewing the same "live" broadcast of the same real-time event is limited by the fact that different people may actually be seeing different versions of the event broadcast. Specifically, while a popular sporting event such as a professional football game might actually be broadcast throughout an entire country or even worldwide, the game itself is interspersed with advertisements or commercials that are often not broadcast throughout the same region as the sporting event itself. Commercials of local interest are typically inserted into at least some of the commercial breaks by regional re-broadcasters of the event. Local commercials may be of intense interest to online collaborators who live in the locality but of considerably lesser or absolutely no interest to online collaborators who don't live in the locality. The lack of a topic of common interest during many commercial breaks diminishes the effectiveness of the overall collaboration experience.

International patent publication WO 98121664 A1 describes a computer network chat room system having multiple chat rooms each being related to a broadcast program. Users select a channel based on timezone, sub-area and carrier and chat rooms are associated with the channel. There is no accommodation of local or regional segments of the broadcast.

US patent application publication number 2005/0078613 discloses a method for establishing a parallel conversation thread during a remote collaboration session. Collaboration between parties over a first communication path can be supplemented by a collaboration over a second communication path without inhibiting the first communication path. In this way an "aside" collaboration can take place.

International patent publication WO 01/93529 A1 discloses describe a mobile betting client receiving a live broadcast. An internet browser interfaces with a betting server through a network. The publication also discloses a client connected to receive and respond to signals based on interactive content over a communications channel, where an interface page provides information pertinent to the interactive content which can be displayed at the client.

### SUMMARY OF THE INVENTION

In a first aspect the present invention accordingly provides a method for enhancing online collaboration among viewers of a broadcast presentation having non-local content segments interspersed with localized content segments, said method comprising the steps of: providing a first online chat room intended for use by viewers receiving broadcast non-local content of the presentation; providing two or more on-line, localized chat rooms; in response to a determination that broadcast of a non-local content segment has begun, transferring viewers to participate in the first online chat room; and in response to a determination that broadcast of a localized content segment has begun, transferring viewers to participate in one of the two or more localized chat rooms.

In a second aspect the present invention accordingly provides a system for enhancing online collaboration among viewers of a broadcast presentation having non-local content segments interspersed with localized content segments, said system comprising: means for providing a first online chat room intended for use by viewers receiving broadcast non-local content of the presentation; means for providing two or more on-line, localized chat rooms; means for, in response to a determination that broadcast of a non-local content segment has begun, transferring viewers to participate in the first online chat room; and means for, in response to a determination that broadcast of a localized content segment has begun, transferring viewers to participate in one of the two or more localized chat rooms.

In a third aspect the present invention accordingly provides a computer program element comprising computer program code to, when loaded onto a computer system and executed thereon, cause the computer to perform the steps of a method as described above.

In one application of the invention, a primary chat room is available at least during actual game play in a sporting event while additional chat rooms are available during commercial breaks in which local commercials are aired. Viewers are transferred to one of the additional chat rooms living in the geographic area in which the local commercials are expected to be of interest. The existence of localized chat rooms gives viewers the opportunity to continue their collaboration on localized topics (e.g., restaurants, local stores, services, etc.) that may be of intense interest to someone living within the locality.

### BRIEF DESCRIPTION OF THE DRAWINGS

Preferred embodiments of the present invention will now be described, by way of example only, with reference to the following drawings in which:
Figure 1 is a timeline showing the nature of content in a common type of broadcast presentation;
Figure 2 is a schematic representation of an enhanced online collaboration system for use where a broadcast presentation is of the type shown in Figure 1 in accordance with a preferred embodiment of the present invention;
Figure 3 is a flow chart of steps that are performed in a chat controller used in the enhanced online collaboration system in accordance with a preferred embodiment of the present invention;
Figure 4 is a schematic illustration of further details of the enhanced online collaboration system in accordance with a preferred embodiment of the present invention;
Figure 5 is a flow chart of a different application of the enhanced online collaboration system; in accordance with a preferred embodiment of the present invention and
Figure 6 is a schematic representation of a computer system that can be used in implementing the chat controller in accordance with a preferred embodiment of the present invention.

### DETAILED DESCRIPTION

Existing technologies, such as satellite communication systems, make it possible to broadcast events virtually in real time throughout the world. For events of intense global interest, such as football's World Cup or baseball's World Series, it is not uncommon for games to be broadcast on a global scale to fans who remain awake at all hours of the day or night to watch the games as they are being played.

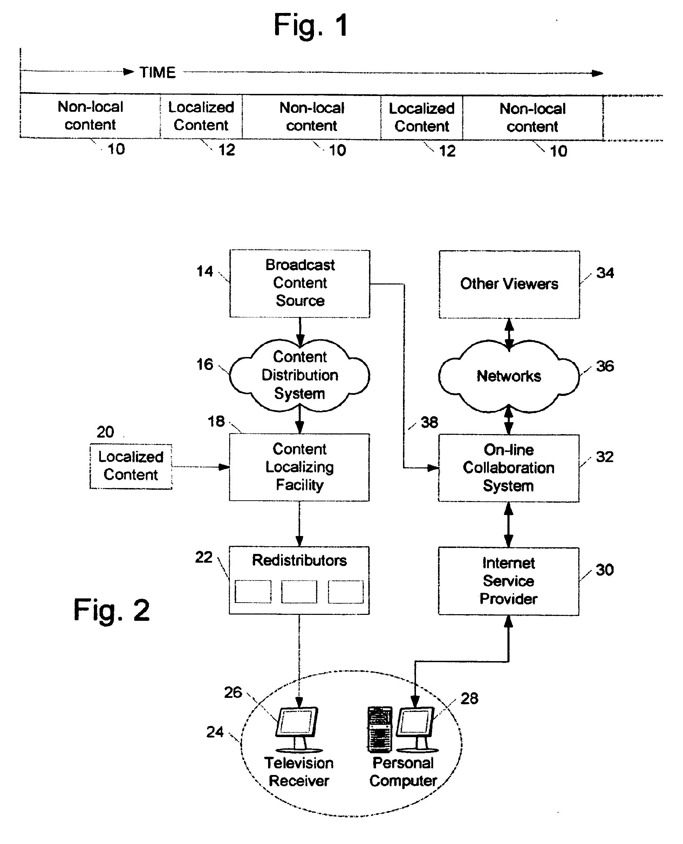

While those fans may see the same game no matter where they are or what time it is, they will not necessarily see the same broadcast. Referring to Figure 1, fans in a particular locale will instead see a mix of segments of non-local content 10 interspersed with segments of localized content 12. The non-local content segments 10 will include the game itself and any other material the broadcast originator feels is suitable for "global" distribution. As used in this specification, the term "global" is used to identify the area over which the broadcast originator intends the game be broadcast (e.g., statewide, nationwide or possibly even worldwide) and does not necessarily imply that the broadcast will always be worldwide.

The localized content segments 12 will include material that is intended to be seen by viewers in less-than-global areas. For example, while a World Series game may be broadcast to viewers throughout the United States, what viewers in a particular locale (e.g., New York City) will actually see is the game itself (in the non-local content segments 10) interspersed with commercials or other advertisements (in the localized content segments 12) that are likely to be of interest only to people who live in or near New York City. As will be discussed in more detail below, the localized content is inserted into the video signal stream by re-broadcasters that receive the global video stream, add local commercials/ advertisements to reserved time slots in the global video stream and then rebroadcast the now-localized video stream over a smaller region such as New York City and the surrounding areas.

While video broadcasts are routinely made available to viewers only after localized content is inserted into the broadcast by regional re-broadcasters, online collaboration systems have operated on a more global scale. Continuing with the above example, an online collaboration facility (that is, a chat room) may be available to anyone viewing the game anywhere in the global broadcast area. A global chat room works fine for online collaboration on the game itself but doesn't work nearly as well when localized content is being broadcast. If viewers in different regions who have been participating in a global chat room try to continue their online collaboration when the broadcast switches to localized content, the results might be amusing or confusing without being helpful. For example, one can only speculate as to the confusion that would result if identically or at least similarly named restaurants in New York City, San Francisco and Orlando (as arbitrary examples) were advertised in the course of localized content seen in those three cities. Each viewer might assume all other viewers were talking about "his" local restaurant when in fact other viewers would be talking about completely different restaurants in their own locales. Even if that scenario were never to occur, there would likely be few topics of general interest to the global set of viewers while localized content was being presented.

The present invention, in one embodiment, enhances online collaboration opportunities available to viewers of a global event by aligning those opportunities more closely with localized broadcasts of the event. Referring to Figure 2, a preferred embodiment of the present invention is an enhanced online collaboration system which, in the relevant embodiment, is intended to be used in conjunction with broadcast presentations made available by a broadcast content source 14, one example of which is a national television network. Source 14 broadcasts a presentation through a content distribution system 16 which can take many forms. Some of the known forms of content distribution systems include satellite systems, microwave relays, and underground/underwater cable systems. The content distribution system 16 distributes the content from source 14 to a number of regional content localizing facilities 18, which may include organizations like local television network affiliates. The broadcast presentation is modified in a localizing facility by inserting commercials or other material, identified only as localized content 20, likely to be of interest to viewers in a sub-global region.

The localized signals are redistributed to end users through a number of redistributors 22. Redistributions provided by redistributors 22 can include over-the-air transmissions directly from local television network affiliates, redistributions through local cable or DLS service providers or redistributions through a satellite service provider servicing the local area. The localized signals are shown being delivered directly to a television receiver 26 in a domain 24 under the control of an end-user. The domain 24 is shown as including a separate personal computer system 28 which the end-user can employ to access an internet-based online collaboration system 32 through an Internet service provider 30. While the Internet service provider 30 is shown as an entity that is separate and apart from any of the redistributors 22, in point of fact, the same organization that redistributes the localized content stream to the end user's television receiver may also support the connection between the Internet service provider and the user's personal computer. Perhaps the best-known example of such an organization is a local cable company that provides both television programming and Internet access services to its subscribers.

Similarly, while the television receiver 26 and the personal computer 28 are shown as separate electronic entities, the same end-user system may be used both to receive and display television signals and to concurrently allow the end user to interact with an Internet-based online collaboration system 32. Such multipurpose systems, which require the use of a television tuner adapter in the personal computer system, are becoming increasingly popular.

Of course, an online collaboration system would be of little value unless there were two or more other people who wanted to participate in the system. In the Figure, other participants in the online collaboration system 34 are shown as a set of Other Viewers 34 who connect to the collaboration system through networks 36. Some but not all of the other viewers may use the same Internet service provider as the end-user at the domain 24.

A significant element in the system is a link 38 between being the broadcast content source 14 and the online collaboration system 32. The link 38 is used to notify the online collaboration system 32 when segments having localized content will occur in the broadcast stream That information enables the online collaboration system 32 to determine what kind of chat rooms will be made available to viewers and when. Generally speaking, when non-localized content (e.g., a World Series game) is being distributed to end-users, all users of the collaboration system are assigned to a primary chat room where it is expected that users will chat about the game itself. However, when the broadcast presentation switches to localized content segment, each user of the collaboration system may be seamlessly transferred from the primary chat room to a local chat room, the membership of which is limited to viewers that have been identified as residents of the geographic area covered by the localized content. Because the local chat room is open primarily to local residents, it is likely that the users of the local chat room will be encouraged to continue chatting, but now about the localized content being presented rather than about the game.

In an area covered by a global broadcast, there will be multiple, local chat rooms with each local chat room being open primarily to residents of the geographic area over which content localized to that geographic area will be broadcast.

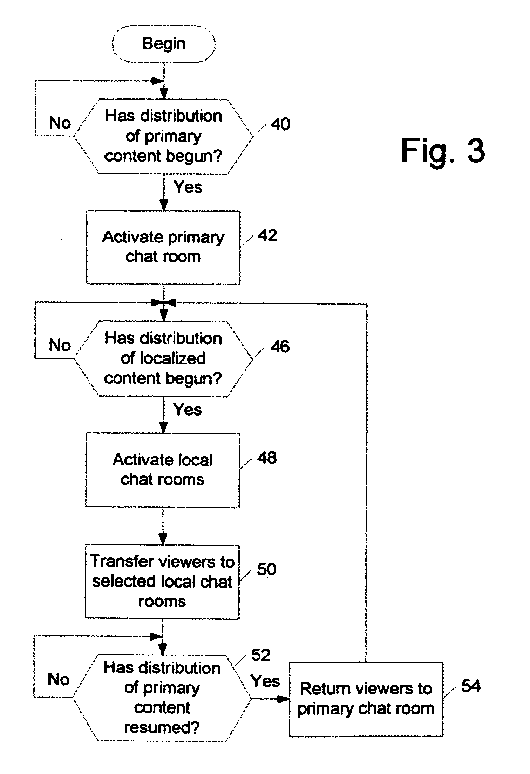

Figure 3 is a flow chart of the process that would be executed by the operator of the online collaboration system 32 to determine what kind of chat rooms would be made available to viewers and when. The system operator 32 monitors information provided by the broadcast source in a step 40 to determine whether the broadcast has begun. Once the broadcast begins, a primary or all-viewers chat room is opened (step 42). The primary chat room remains open at least until it is determined in a step 46 that distribution of localized content has begun. When the distribution of localized content begins, local chat rooms are activated in the step 48 in some or all of the geographic regions covered by different localized content. Viewers are transferred to specific local chat rooms based on their geographic locations. There are different ways in which the collaboration system may obtain information about a user's location. Some of these ways are discussed below.

After viewers have transferred to the local chat rooms, the collaboration system continues to monitor the broadcast information to determine (in step 52) when the broadcast returns to distribution of primary (non-local) content. At this point, the viewers are returned (step 54) to the primary chat room. Preferably, the transfers to and from the local chat rooms are transparent to the viewers so that a viewer will be aware only that the broadcast content has changed and possibly that he is no longer hearing from some of the viewers he had been collaborating with.

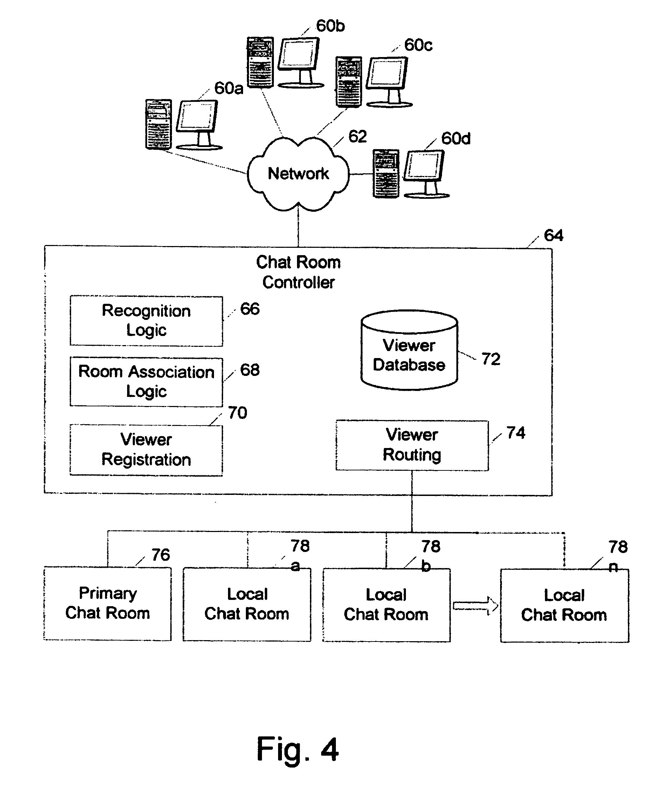

Figure 4 is a schematic illustration of a chat room controller 64 included within the online collaboration system 32. Chat room controller 64 interfaces with users (shown as users 60a-60d) of the online collaboration system through a network 62, such as the Internet.

One of the primary functions of the chat room controller 64 is to determine to which of several local chat rooms (78a, 78b,...,78n) to which a particular user should be transferred when localized content is being broadcast. As noted above, the assignment is generally based on the geographic location of the particular user. One way for the chat room controller 64 to establish a user's geographic location is based on the user's IP address and where that IP address is registered. This can be determined by recognition logic 66 when the user's client makes an initial collaboration request to the collaboration system. Alternatively, the user may be asked to provide geographic location information as part of a one-time registration process 70 that must be completed before the user can make use of the online collaboration system.

In either event, the user location information can be processed by room association logic 68 to determine which of the local chat rooms is appropriate for the user's location. Viewer information, including the identity of the local chat room can be retained in a viewer database 72 for use by a viewer routing component 74 that handles the viewer transfers between the primary chat room 76 and a selected one of the local chat rooms 78a-78n.

Until now, a simplifying but perhaps unrealistic assumption has been made that viewers will be content to allow the system to transfer them back and forth between a primary chat room and one of the local chat rooms. It is entirely possible that a viewer who has been engaged in a spirited discussion with other viewers in the primary chat room won't want to end the discussion simply because the broadcast has switched to localized content. To deal with this possibility, the user may be given the option to remain in the primary chat room only or to remain in the primary chat room while also being added to the local chat room. The latter would give the viewer the opportunity to participate in whichever of the chat rooms is most interesting at any given time.

Similarly, it is possible that a viewer may be interested in participating in a local chat room other than the chat room that is associated with his normal geographic location. For example, if the viewer will be traveling or moving to another locale, he may be more interested in participating or at least entering the chat room associated with that locale. For that reason, the viewer will be given the option of selecting a local chat room other than the one associated with his normal geographic location.

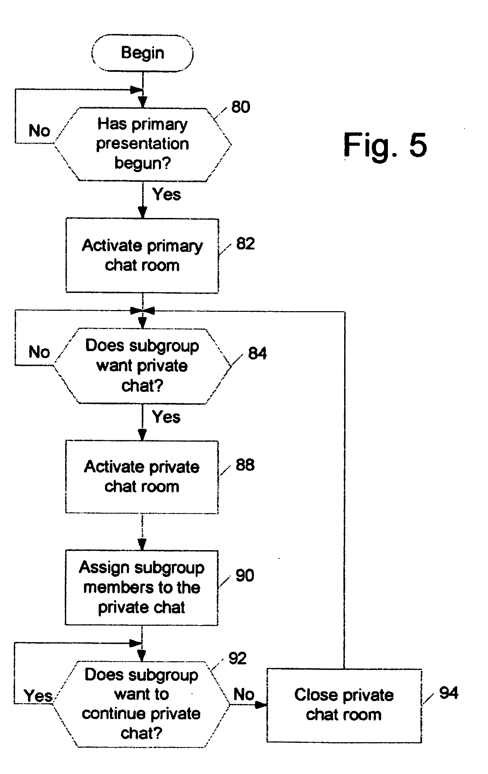

Thus far, embodiments of the invention have been described for use in an environment in which a popular event (an athletic contest or television show) is being broadcast. There are other environments in which embodiments the invention may be used. Figure 5 is a flow chart of steps that would be performed where a preferred embodiment of the invention is used in an educational environment.

The phrase "educational environment" should be interpreted broadly enough to include presentations made in both a classical educational environment and in a business educational environment. In a classical educational environment, one or more instructors may provide a lecture to a group of online students. In a business educational environment, one or more speakers may provide information (e.g., a reorganization plan) to a group of online employees. Either kind of information may be considered a primary presentation.

Once it is determined (in step 80) that the primary presentation has begun, a primary chat room is activated (step 82) for use by the entire group receiving the presentation. The primary chat room can have different formats. One format would allow the presenter of the information to participate in the chat by fielding questions from the group and providing online responses in parallel with the actual presentation. This format would be most useful where the delivery of the primary presentation is highly automated, leaving the nominal presenter time to read and respond to comments made by the group.

Another format would be to exclude the presenter from the chat room, limiting membership in the chat room to the group and possibly one or more moderators representing the presenter. The obvious advantage of this format is that it prevents the presenter from being distracted by what is happening in the chat room.

In the course of the primary presentation it is entirely possible that one or more of the attendees might want to have a secondary or private chat; that is, a chat confined to a few of the attendees. There may be several reasons why one or more attendees would want to engage in a private chat. One reason is that an attendee may not understand something that was said in the primary presentation and want to send a question to a small group of friends rather than to the entire group attending the presentation. Another reason is that something in the primary presentation may be particularly important to a subgroup of the attendees so that members of the subgroup would want to discuss it among themselves without necessarily revealing their thinking to others outside the subgroup.

Once it is determined (in step 84) that one or more members of the subgroup want a private chat, a private chat room is activated (step 88) and members of the subgroup are assigned (step 90) to the private chat room. There would be various ways to determine the membership of a private chat room. Membership might be at the invitation of the initiator of the chat room or might be predefined, say by membership in a particular department in a business.

The private chat room could remain open until its members decide (step 92) they no longer wish to continue the private chat. Such a decision could be made by majority vote of the subgroup or by an appointed leader of the subgroup. Once the decision is made, the private chat room is closed (step 94) and the subgroup resumes participation in the primary chat room.

While only a single private chat room is described, it is entirely possible that multiple chat rooms may be concurrently activated and that the same individual may concurrently participate in more than one of the private chat rooms at a given time.

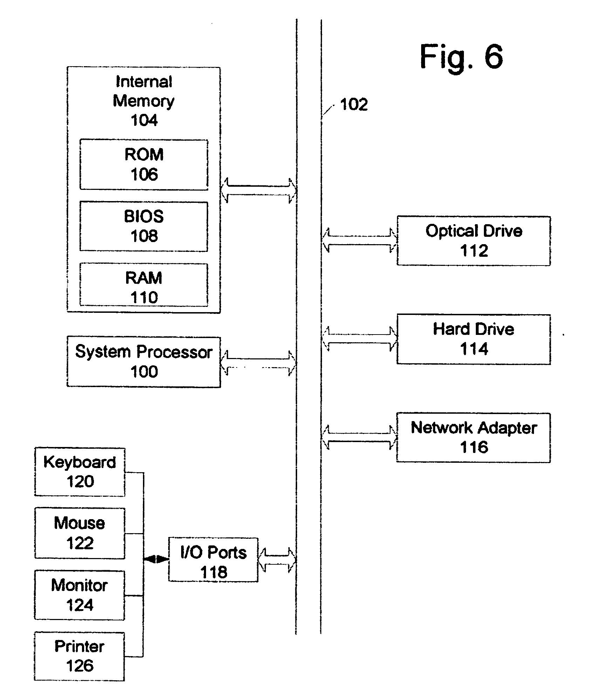

The chat room controller described earlier may be implemented by programming a general purpose computer system of the type shown in Figure 6. A computer system includes a system processor 100, internal memory components 104 and one or more "external" memory components, such as an optical drive 112 and a magnetic hard drive 114. The internal memory 104 includes specific types of memory such as read only memory (ROM) 106, basic input/out system (BIOS) memory 108 and random access memory (RAM) 110. The BIOS 108 stores configuration information for the computer system and basic routines used to control the transfer of information among the components of the computer system.

Drives, such as optical drive 112 and hard drive 114, provide non-volatile storage for applications and processes that execute in the computer system and for data used in and/or generated by those applications and processes. Depending on the technology employed, the drives may include removable media. The special purpose programming needed by a computer system to implement a preferred embodiment of the present invention would typically be stored in one of these drives and transferred as needed into RAM 110.

The computer system also includes a significant number of input/output (I/O) ports 118 that provide interfaces between a variety of input/output devices and the remainder of the computer system. Common examples of input/output devices include keyboard 120, mouse 122, monitor 124 and printer 126. It should not be implied that only the devices shown in Figure 6 can be part of the computer system. There are simply too many different types of input/output devices to include in a drawing. Moreover, it should not be implied that the input/output ports 118 are limited to a particular technology. There are many different types of input/output ports that are used as device interfaces. Current examples of port technologies that are successfully used include serial ports, parallel ports, SCSI, USB ports, FireWire ports and infrared ports. Other port technologies undoubtedly already exist or will be developed.

Finally, the computer system will include one or more network adapters 116 that are needed to establish communications between the computer system and other computers. Many different types of network adapters exist today and there is no intent to limit the description to a particular type.

While specific embodiments of the invention have been described, there is no intent to limit the scope of the invention to those specific embodiments. For example, the term "chat" used extensively throughout the specification and claims should be construed broadly enough to cover any and all types of real time (or near real time) online collaboration. The scope of the invention includes not only the specific embodiments that also all variations and modifications that would occur to those of ordinary skill in the relevant art.

## Claims

1. A method for enhancing online collaboration among viewers of a broadcast presentation having non-local content segments (10) interspersed with localized content segments (12), said method comprising the steps of:
providing a first online chat room (76) intended for use by viewers receiving broadcast non-local content of the presentation;
providing two or more on-line, localized chat rooms (78);
in response to a determination (52) that broadcast of a non-local content segment has begun, transferring (54) viewers to participate in the first online chat room 76);and
in response to a determination (46) that broadcast of a localized content segment has begun, transferring (50) viewers to participate in one of the two or more localized chat rooms (78).

2. A method as set forth in claim 1 wherein each of said localized chat rooms (78) is associated with a specific geographic area smaller than the geographic area over which the non-local content is broadcast.

3. A method as set forth in claim 2 including the additional steps of:
detecting the geographic area in which a particular viewer is located; and
assigning the viewer to the localized chat room (78) associated with that geographic area.

4. A method as set forth in claim 3 wherein a specific geographic area is detected based on information provided by the viewer during a registration process.

5. A method as set forth in claim 3 wherein a specific geographic area is detected based on the IP address of the viewer's system and where that IP address is registered.

6. A method as set forth in claim 3 further including the step of enabling a viewer to remain in the first online chat room while localized content is being broadcast.

7. A method as set forth in claim 6 further including the step of enabling a viewer to choose a localized chat room (78) other than the chat room to which the user is initially assigned.

8. A system for enhancing online collaboration among viewers of a broadcast presentation having non-local content segments (10) interspersed with localized content segments (12), said system comprising:
means for providing a first online chat room (76) intended for use by viewers receiving broadcast non-local content of the presentation;
means for providing two or more on-line, localized chat rooms (78);
means for, in response to a determination (52) that broadcast of a non-local content segment has begun, transferring (54) viewers to participate in the first online chat room (76); and
means for, in response to a determination (46) that broadcast of a localized content segment has begun, transferring (50) viewers to participate in one of the two or more localized chat rooms (78).

9. A computer program element comprising computer program code to, when loaded onto a computer system and executed thereon, cause the computer to perform the steps of a method as claimed in any of claims 1 to 7.

## Patentansprüche

1. Verfahren für die Verbesserung der online Zusammenarbeit zwischen Betrachtern einer übertragenen Präsentation, die nichtörtliche Inhaltssegmente (10) mit darin eingestreuten ortsgebundenen Inhaltssegmenten (12) aufweist, wobei das Verfahren die folgenden Schritte umfasst:
Bereitstellen eines ersten Online-Chat-Raums (76), der für die Verwendung durch Betrachter vorgesehen ist, übertragene, nichtörtlichen Inhalte der Präsentation empfangen;
Bereitstellen von zwei oder mehr ortsgebundenen online Chat-Räumen (78);
als Reaktion auf eine Feststellung (52), dass die Übertragung eines nichtörtlichen Inhaltssegments begonnen hat, Verlagern (54) von zur Teilnahme vorgesehenen Betrachtern in den ersten Online-Chat-Raum (76); und
als Reaktion auf eine Feststellung (46), dass die Übertragung eines ortsgebundenen Inhaltssegments begonnen hat, Verlagern (50) von zur Teilnahme vorgesehenen Betrachtern in einen der zwei oder mehr ortsgebundenen Chat-Räume (78).

2. Verfahren nach Anspruch 1, wobei jeder der ortsgebundenen Chat-Räume (78) einem bestimmten geografischen Gebiet zugehörig ist, das kleiner ist als das geografische Gebiet, in dem der nichtörtliche Inhalt übertragen wird.

3. Verfahren nach Anspruch 2, das die folgenden zusätzlichen Schritte beinhaltet:
Erkennen des geografischen Gebiets, in dem sich ein bestimmter Betrachter befindet; und
Zuweisen des Betrachters zu dem ortsgebundenen Chat-Raum (78), der dem geografischen Gebiet zugehörig ist.

4. Verfahren nach Anspruch 3, wobei ein bestimmtes geografisches Gebiet auf der Grundlage von Informationen erkannt wird, die von dem Betrachter bei einem Registrierungsvorgang bereitgestellt werden.

5. Verfahren nach Anspruch 3, wobei ein bestimmtes geografisches Gebiet auf der Grundlage der IP-Adresse des Systems des Betrachters und der Stelle, an der die IP-Adresse registriert ist, erkannt wird.

6. Verfahren nach Anspruch 3, das des Weiteren den Schritt beinhaltet, mit dem es einem Betrachter ermöglicht wird, in dem ersten Online-Chat-Raum zu verbleiben, während ortsgebundene Inhalte übertragen werden.

7. Verfahren nach Anspruch 6, das des Weiteren den Schritt beinhaltet, mit dem es einem Betrachter ermöglicht wird, einen anderen ortsgebundenen Chat-Raum (78) als denjenigen auszuwählen, dem der Benutzer ursprünglich zugewiesen wurde.

8. System für die Verbesserung der online Zusammenarbeit zwischen Betrachtern einer übertragenen Präsentation, die nichtörtliche Inhaltssegmente (10) mit darin eingestreuten ortsgebundenen Inhaltssegmenten (12) aufweist, wobei das System Folgendes umfasst:
ein Mittel für das Bereitstellen eines ersten Online-Chat-Raums (76), der für die Verwendung durch Betrachter vorgesehen ist, die übertragenen, nichtörtlichen Inhalte der Präsentation empfangen;
ein Mittel für das Bereitstellen von zwei oder mehr ortsgebundenen online Chat-Räumen (78);
ein Mittel, um als Reaktion auf eine Feststellung (52), dass die Übertragung eines nichtörtlichen Inhaltssegments begonnen hat, zur Teilnahme vorgesehene Betrachter in den ersten Online-Chat-Raum (76) zu verlagern (54); und
ein Mittel, um als Reaktion auf eine Feststellung (46), dass die Übertragung eines ortsgebundenen Inhaltssegments begonnen hat, zur Teilnahme vorgesehene Betrachter in einen der zwei oder mehr ortsgebundenen Chat-Räume (78) zu verlagern (50).

9. Computerprogrammelement, das Computerprogrammcode umfasst, der, wenn er in ein Computersystem geladen und dort ausgeführt wird, den Computer dazu veranlasst, die Schritte eines Verfahrens nach einem beliebigen der Ansprüche 1 bis 7 durchzuführen.

## Revendications

1. Procédé destiné à améliorer la collaboration en ligne parmi des téléspectateurs d'une présentation diffusée ayant des segments de contenu non local (10) entrecoupés de segments de contenu localisé (12), ledit procédé comprenant les étapes consistant à:
fournir une première salle de chat en ligne (76) destinée à être utilisée par des téléspectateurs recevant un contenu non local diffusé de la présentation ;
fournir deux ou plus salles de chat localisées en ligne (78) ;
en réponse à une détermination (52) que la diffusion d'un segment de contenu non local a commencé, transférer (54) des téléspectateurs pour participer à la première salle de chat en ligne (76) ; et
en réponse à une détermination (46) que la diffusion d'un segment de contenu localisé a commencé, transférer (50) des téléspectateurs pour participer à l'une des deux ou plus salles de chat localisées (78).

2. Procédé selon la revendication 1, dans lequel chacune desdites salles de chat localisées (78) est associée à une zone géographique spécifique plus petite que la zone géographique dans laquelle le contenu non local est diffusé.

3. Procédé selon la revendication 2, incluant les étapes supplémentaires consistant à :
détecter la zone géographique dans laquelle se trouve un téléspectateur particulier ; et
assigner le téléspectateur à la salle de chat localisée (78) associée à cette zone géographique.

4. Procédé selon la revendication 3, dans lequel une zone géographique spécifique est détectée sur la base d'informations fournies par le téléspectateur lors d'un processus d'enregistrement.

5. Procédé selon la revendication 3, dans lequel une zone géographique spécifique est détectée sur la base de l'adresse IP du système du téléspectateur et du lieu où cette adresse IP est enregistrée.

6. Procédé selon la revendication 3, incluant en outre l'étape consistant à permettre à un téléspectateur de rester dans la première salle de chat en ligne pendant qu'un contenu localisé est diffusé.

7. Procédé selon la revendication 6, incluant en outre l'étape consistant à permettre à un téléspectateur de choisir une salle de chat localisée (78) autre que la salle de chat à laquelle l'utilisateur est initialement assigné.

8. Système destiné à améliorer la collaboration en ligne parmi des téléspectateurs d'une présentation diffusée ayant des segments de contenu non local (10) entrecoupés de segments de contenu localisé (12), ledit système comprenant :
un moyen pour fournir une première salle de chat en ligne (76) destinée à être utilisée par des téléspectateurs recevant un contenu non local diffusé de la présentation ;
un moyen pour fournir deux ou plus salles de chat localisées en ligne (78) ;
un moyen pour, en réponse à une détermination (52) que la diffusion d'un segment de contenu non local a commencé, transférer (54) des téléspectateurs pour participer à la première salle de chat en ligne (76) ; et
un moyens pour, en réponse à une détermination (46) que la diffusion d'un segment de contenu localisé a commencé, transférer (50) des téléspectateurs pour participer à l'une des deux ou plus salles de chat localisées (78).

9. Élément de programme d'ordinateur comprenant un code de programme d'ordinateur pour, lorsqu'il est chargé sur un système informatique et exécuté sur celui-ci, amener l'ordinateur à effectuer les étapes d'un procédé selon l'une quelconque des revendications 1 à 7.
